# EUROPEAN PATENT APPLICATION

(11) **EP 4 414 189 A1**
(43) Date of publication of application: **14.08.2024**
(21) Application number: 21961052.4
(22) Date of filing: 22.10.2021
(51) Int. Cl.: B60G 17/052, B60G 17/015

(54) **SUSPENSION SYSTEM AND CONTROL METHOD THEREOF, AND VEHICLE**

(71) Applicant: Huawei Technologies Co., Ltd., Shenzhen, Guangdong 518129 (CN)
(72) Inventor: SHU, Yinhui, Shenzhen, Guangdong 518129 (CN); SHU, Jin, Shenzhen, Guangdong 518129 (CN); WENG, Hao, Shenzhen, Guangdong 518129 (CN)
(74) Representative: Epping - Hermann - Fischer
(86) International application number: PCT/CN2021/125706
(87) International publication number: WO 2023/065304

(57) **Abstract**

This application discloses a suspension system and a control method thereof, and a vehicle. The suspension system includes a suspension assembly, a driver, a controller, a compressor, and a gas tank. The suspension assembly has a gas spring and a height sensor. The gas tank contains gas, the gas tank is connected to the compressor through a first ventilation pipe, and the compressor is connected to the gas spring through a second ventilation pipe. A first switch valve is disposed on the first ventilation pipe, and a second switch valve is disposed on the second ventilation pipe. The driver is separately electrically connected to the controller, the compressor, the first switch valve, the second switch valve, and the height sensor. The suspension system may be installed between a wheel and a vehicle body of the vehicle. In a working process of the suspension system, a height between the wheel and the vehicle body of the vehicle is adjusted based on a working condition of the vehicle and an external input, to improve stability and comfort of the vehicle. A structure of each part of the suspension system is an independent structure, to implement unified control of the vehicle.

## Description

### TECHNICAL FIELD

This application relates to the field of vehicle structure technologies, and in particular, to a suspension system and a control method thereof, and a vehicle.

### BACKGROUND

A suspension system of an automobile is connected between a sprung mass and an unsprung mass. This can weaken disturbance of road excitation to an output variable of the automobile. An output of the automobile is generally considered from two aspects: comfort and road adhesion, and corresponding output variables of the automobile are respectively an acceleration of an automobile body and deformation of tires. There is a contradiction between the acceleration of the automobile body and the deformation of the tires. In the suspension system of the automobile, a compromise between the acceleration of the automobile body and the deformation of the tires needs to be measured when suspension travel and design costs are considered, so that the automobile in a driving state can appropriately respond to requirements of a driver or vehicle design, to meet requirements of comfort, maneuverability, and safety design. The suspension system of the automobile usually includes a passive suspension system, a semi-active suspension system, and a full active suspension system.

The passive suspension system is a mainstream suspension system for a long time period because of an advantage of low costs. As electronic control technologies develop, the semi-active suspension system is gradually favored by the market because of controllability and adaptive adjustment, and is equipped on more models of automobiles. The semi-active suspension system usually includes a spiral spring or gas spring and a damper whose damping can be adjusted continuously. An active suspension is equipped on a few top-level models of automobiles, and needs additional energy inputs such as a hydraulic pump and a linear motor to implement an active actuation operation.

A current semi-active air suspension system usually undergoes gas filling and release by using a semi-active shock absorber as a damping element and a gas spring as an elastic element to adjust a height characteristic of the current semi-active air suspension system, to meet different external input requirements. In the conventional technology, in terms of a gas path of the gas spring, a gas pump is mainly used to supply gas from the atmosphere to the gas spring, and the gas is directly discharged into the atmosphere during exhaust, to implement extension and compression of the gas spring. In this open-loop solution of the gas path, because air with low atmospheric pressure needs to be pressurized to specific pressure, pressure changes greatly. Therefore, long time is consumed, and lifting and lowering speeds of an automobile body are low. In addition, because the air needs to be pressurized to specific pressure, high power of an air compressor is required, and noise is loud.

### SUMMARY

This application provides a suspension system and a control method thereof, and a vehicle. If gas pressure in a gas path system of the suspension system changes slightly, a speed of adjusting a height of a gas spring is fast, power of a compressor of the suspension system is low, and noise and power consumption are low. In addition, in a technical solution of this application, each part has an independent structure, and may be separately manufactured and installed, and therefore, costs are low. This helps move a controller upward, to implement unified control of the entire vehicle.

According to a first aspect, this application provides a suspension system. The suspension system includes a suspension assembly, a driver, a controller, a compressor, and a gas tank. The suspension assembly has a gas spring and a height sensor. The gas tank is provided with gas, the gas tank is connected to the compressor through a first ventilation pipe, and the compressor is connected to the gas spring through a second ventilation pipe. In this case, the compressor may transfer gas in the gas tank to the gas spring, or transfer gas in the gas spring to the gas tank. In a specific technical solution, a first switch valve is disposed on the first ventilation pipe, and a second switch valve is disposed on the second ventilation pipe. Therefore, opening or closing of the first switch valve and the second switch valve is controlled, so that an entire gas path can be ventilated or closed. The driver is separately electrically connected to the controller, the compressor, the first switch valve, and the second switch valve, and the controller is electrically connected to the height sensor. The suspension system may be installed between a wheel of a vehicle and a vehicle body. In a working process of the suspension system, the height sensor is configured to detect a distance between the wheel and the vehicle body, and the controller is configured to: receive a height signal of the height sensor, generate a control signal based on the height signal, and transfer the control signal to the driver. After receiving the control signal, the driver is configured to: control, based on the control signal, the first switch valve and the second switch valve to open or close, and control the compressor to transmit gas to the gas spring or stop transmitting gas.

The gas path system of the suspension system in the technical solution of this application includes a gas tank for storing gas, and gas in the gas tank has specific pressure. Compared with gas pressure required in the gas spring, the gas pressure in the gas tank changes slightly. Therefore, a height of the gas spring is adjusted at a high speed, power of the compressor of the suspension system is low, and noise and power consumption are also low. In addition, in a technical solution of this application, each part has an independent structure, and may be separately manufactured and installed, and therefore, costs are low. This helps move a controller upward, to implement unified control of the entire vehicle.

It should be noted that the controller receives the height signal of the height sensor, so that the controller may be directly connected to the height sensor and receive the height signal. Alternatively, the driver may be connected to the height sensor, and the driver obtains the height signal, and transfers the height signal to the controller. In other words, that the controller is electrically connected to the height sensor may mean that the controller is directly connected to the height sensor, or may mean that the controller is connected to the height sensor through the driver.

In a specific technical solution, the suspension assembly further includes a shock absorber. The driver is connected to the shock absorber, and the driver is configured to control, based on the control signal of the controller, the shock absorber to adjust a damping force. In the technical solution of this application, the shock absorber may adjust the damping force based on an actual running status of the vehicle. This improves comfort of a user.

The compressor is further connected to a third ventilation pipe, and the third ventilation pipe opens to the outside atmosphere, so that the compressor can compress air in the atmosphere and transmit the compressed air to the gas tank during working, to fill the gas tank with gas. A third switch valve is disposed on the third ventilation pipe, and the third switch valve is enabled to open only when gas filling is required. The third switch valve is closed when there is no need to fill gas, so that gas in a suspension system is kept circulating internally and does not leak from the third ventilation pipe. In this technical solution, the suspension system may fill gas by the suspension system, to keep a sufficient amount of gas in the suspension system to maintain normal working. A specific manner of filling the gas tank with gas is not limited in this application. For example, the third switch valve may also be connected to the driver, and the driver is connected to the controller. The controller may be connected to a control button, and a user presses the control button according to a requirement, to fill gas. Alternatively, the controller may control periodical gas filling.

Alternatively, in still another specific technical solution, the suspension system may further include a pressure sensor. The pressure sensor is connected to the gas tank and is configured to detect pressure in the gas tank. The first switch valve is a three-way valve, configured to transmit gas in the gas tank to the gas spring, and configured to transmit gas from the atmosphere to the gas tank. The driver is electrically connected to the compressor, the three-way valve, and the third switch valve, and the controller is electrically connected to the pressure sensor. The controller is configured to: obtain a pressure signal of the pressure sensor, and generate a gas filling signal based on the pressure signal. Specifically, when pressure detected by the pressure sensor is lower than specified pressure, it may be considered that the gas in the gas tank is insufficient, and gas filling is required. The driver obtains the gas filling signal generated by the controller, drives, based on the gas filling signal, the three-way valve to connect the compressor and the gas tank, drives the third switch valve to open, and drives the compressor to compress air and then transmit the compressed air to the gas tank. In this solution, gas filling may be performed based on an actual gas condition in the gas tank. When it is found that the gas in the gas tank is insufficient, gas filling may be performed at any time, to ensure working reliability of the suspension system, and avoid a useless gas filling operation.

It should be noted that the controller receives the pressure signal of the pressure sensor, so that the controller may be directly connected to the pressure sensor and receive the pressure signal. Alternatively, the driver may be connected to the pressure sensor, and the driver obtains the pressure signal, and transfers the pressure signal to the controller. In other words, that the controller is electrically connected to the pressure sensor may mean that the controller is directly connected to the pressure sensor, or may mean that the controller is connected to the pressure sensor through the driver.

A quantity of suspension assemblies included in the suspension system is not limited, and the suspension system includes at least two suspension assemblies. A gas spring in each suspension assembly is connected to one second switch valve. In this solution, the at least two suspension assemblies may adjust heights of positions at which the at least two suspension assemblies are located, and may be separately controlled. This improves stability and comfort of the vehicle.

In the foregoing embodiment, all second switch valves are of an integrated structure, to reduce space occupied by the second switch valves.

In addition, when the suspension system includes the at least two suspension assemblies, each suspension assembly is correspondingly provided with one driver, so that a distance between the driver and a corresponding suspension assembly is short, to reduce a cable harness and facilitate cabling of the suspension system.

In a specific technical solution, the suspension system may include four suspension assemblies. The four suspension assemblies are disposed in a matrix, so that the suspension assemblies may be disposed at all four corners of the vehicle, to adjust heights of the vehicle body at the four corners.

Specifically, the four suspension assemblies do not need to be simultaneously driven, and the corresponding gas springs may be controlled, based on signals of the corresponding height sensors, to perform gas filling and gas release, to improve stability and comfort of the vehicle.

In the technical solution of this application, the controller, the driver, and the first switch valve are split structures. In this case, in addition to being a system controller, the controller may be a domain controller or a vehicle controller. The vehicle usually includes a plurality of control systems, and the domain controller means that the controller may control at least two of the plurality of control systems. The vehicle controller can control all control systems.

According to a second aspect, this application further provides a control method of the suspension system in the first aspect. The control method specifically includes: receiving a height signal of a height sensor; comparing the height signal with a target height; and when the height signal is less than the target height, indicating that a height of a gas spring needs to increase, controlling a first switch valve and a second switch valve to open, and controlling a compressor to drive, in a forward rotation manner, gas in a gas tank to flow into the gas spring, so that the height of the gas spring increases; when the height signal is greater than the target height, indicating that the height of the gas spring needs to be reduced, controlling the first switch valve and the second switch valve to open, and controlling the compressor to drive, in a reverse rotation manner, gas in the gas spring to flow into the gas tank, so that the height of the gas spring is reduced; or when the height signal is equal to the target height, controlling the first switch valve and the second switch valve to close. The method can be used to implement gas filling and gas release processes of the suspension system. In this solution, the gas tank is used to load gas, and power of the compressor of the suspension system is low, and noise and power consumption are also low. It should be noted that, in this embodiment of this application, the target height may be a specific height value, or may be a height range value. That the height signal is equal to the target height means that the height signal is within the height range value.

The compressor may also be connected to a third ventilation pipe, and the third ventilation pipe opens to the outside atmosphere, so that the compressor can compress air in the atmosphere and transmit the compressed air to the gas tank during working, to fill the gas tank with gas. A specific gas filling control method includes: controlling the first switch valve and a third switch valve to open, and controlling the compressor to compress air and then transmit the compressed air to the gas tank. The third switch valve is closed when there is no need to fill gas, so that gas in the suspension system is kept circulating internally and does not leak from the third ventilation pipe. In this technical solution, the suspension system can perform gas filling by the suspension system, to keep a sufficient amount of gas in the suspension system to maintain normal working.

The suspension system may further include a pressure sensor. The pressure sensor is connected to the gas tank and is configured to detect pressure in the gas tank. The control method further includes: obtaining pressure detected by the pressure sensor, and when the pressure is less than specified pressure, considering that gas in the gas tank is insufficient, and generating a gas filling signal; and controlling, based on the gas filling signal, the first switch valve and the third switch valve to open, and controlling the compressor to compress air and then transmit the compressed air to the gas tank. In this solution, when it is found that the gas in the gas tank is insufficient, gas filling may be performed at any time based on an actual gas condition in the gas tank, to ensure working reliability of the suspension system, and avoid a useless gas filling operation. According to a third aspect, this application further provides a vehicle. The vehicle includes a vehicle body, a wheel shaft, wheels, and the suspension system in any one of the foregoing technical solutions. The wheels are installed on the wheel shaft, and the suspension system is installed between the wheel shaft and the vehicle body. The suspension system of the vehicle adjusts a height of a gas spring at a high speed, and power of a compressor of the suspension system is low. Therefore, a corresponding speed of the vehicle for a bumpy road surface or the like is also fast, and noise and power consumption are also low. In addition, in the technical solution of this application, structures such as a controller and a driver are independent structures, and may be separately manufactured and installed, and therefore, costs are low. This helps move the controller upward, to implement unified control of the entire vehicle.

In a specific technical solution, the controller may be a domain controller. The vehicle includes a plurality of systems, and some of the plurality of systems share the domain controller. In other words, the domain controller can control at least two systems of the vehicle.

In addition, the controller is a vehicle controller. The vehicle includes a plurality of systems, and all the systems share the vehicle controller. In this solution, one vehicle controller can control all the systems.

During specific arrangement of the suspension system, the suspension system may include a plurality of suspension assemblies, and the plurality of suspension assemblies are disposed in a one-to-one correspondence with the wheels of the vehicle. Therefore, stability of the vehicle in a running process can be improved, and comfort of a user can be improved.

### BRIEF DESCRIPTION OF DRAWINGS

FIG. 1 is a schematic diagram of a structure of a vehicle according to an embodiment of this application;
FIG. 2 is a schematic diagram of a connection of a suspension system of a vehicle according to an embodiment of this application;
FIG. 3 is a schematic diagram of a gas filling process of a suspension system of a vehicle according to an embodiment of this application;
FIG. 4 is a schematic diagram of a gas release process of a suspension system of a vehicle according to an embodiment of this application;
FIG. 5 is a schematic diagram of a connection of another suspension system of a vehicle in an embodiment of this application; and
FIG. 6 is a flowchart of a control method of a suspension system according to an embodiment of this application.

### Reference numerals:

100: vehicle body; 200: wheel;
300: wheel shaft; 1: suspension assembly;
101: gas spring; 102: shock absorber;
103: height sensor; 2: driver;
3: controller; 4: compressor;
5: gas tank; 6: first ventilation pipe;
7: first switch valve; 8: second ventilation pipe;
9: second switch valve; 10: third ventilation pipe;
11: third switch valve; 12: pressure sensor.

### DESCRIPTION OF EMBODIMENTS

For ease of understanding, embodiments of this application provide a suspension system and a control method thereof, and a vehicle. The following describes application scenarios of the suspension system and the control method thereof, and the vehicle. Currently, people have an increasingly high requirement for comfort in a driving process of a vehicle, and requirements such as safety and maneuverability need to be met. The suspension system of the vehicle can better improve comfort of the vehicle. Specifically, the suspension system is connected between a sprung mass and an unsprung mass of the vehicle. The sprung mass may be understood as a vehicle body, namely, structural space described by a user, and the unsprung mass may be understood as a structure like a wheel. Especially for an active air suspension system, the air suspension system is formed by a gas spring and a shock absorber. A controller may drive the gas spring and the shock absorber to work based on a current state of the vehicle, and adjust a height of the vehicle and damping of the shock absorber. When the vehicle continuously travels on a bumpy road, the controller may control and drive the gas spring and the shock absorber to work, and adjust a height between the sprung mass and the unsprung mass, so that the height between the sprung mass and the unsprung mass reaches a set height. In addition, the shock absorber outputs an optimal damping force, to improve comfort of the user. However, in the conventional technology, to resolve problems such as loud noise and a slow response speed in an open-loop solution of a gas path, a closed-loop solution of the gas path is proposed. In the closed-loop solution of the gas path, a controller, a driver, and a valve are of an integrated structure. Therefore, there are problems such as a high coupling degree, a large manufacturing difficulty, and high costs. In addition, the controller can only be used as an independent controller to control the suspension system. This is not conducive to integration of the vehicle.

The following describes in detail embodiments of this application with reference to accompanying drawings. Terms used in the following embodiments are merely intended to describe specific embodiments, but are not intended to limit this application. The terms "one", "a", and "this" of singular forms used in this specification and the appended claims of this application are also intended to include expressions such as "one or more", unless otherwise specified in the context clearly.

Reference to "an embodiment", "a specific embodiment", or the like described in this specification indicates that one or more embodiments of this application include a specific feature, structure, or characteristic described with reference to the embodiment. Terms "include", "have", and their variants all mean "include but are not limited to", unless otherwise specifically emphasized in another manner.

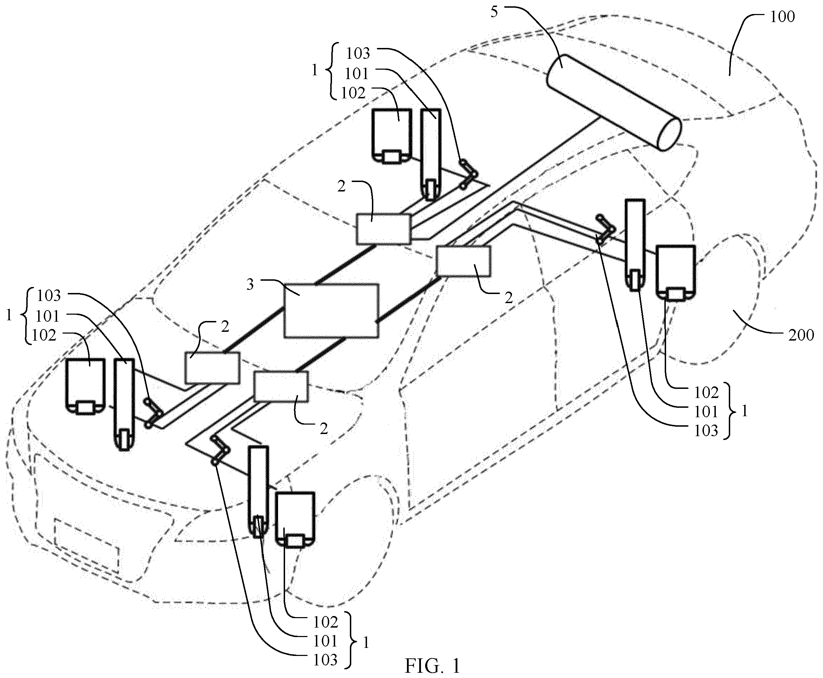

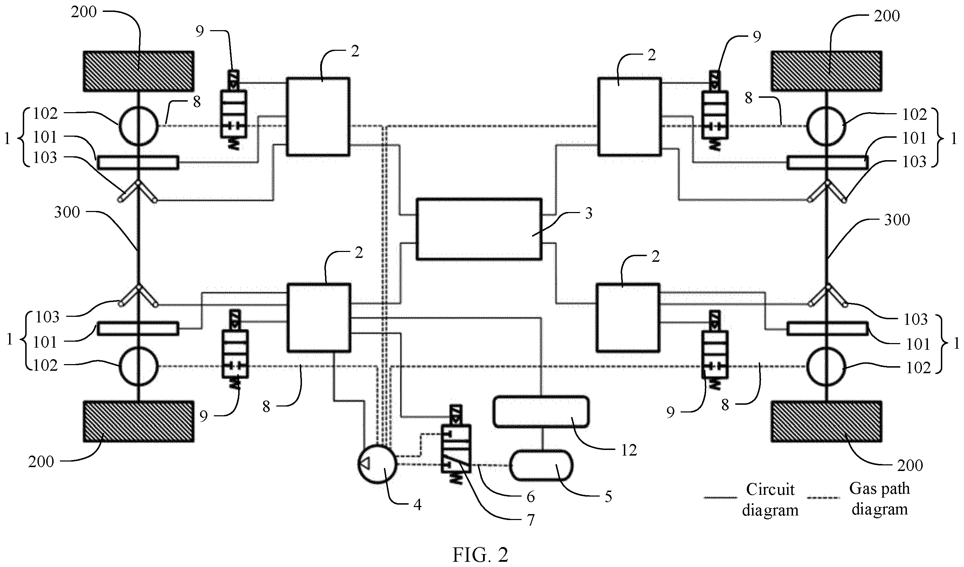

FIG. 1 is a schematic diagram of a structure of a vehicle according to an embodiment of this application. FIG. 2 is a schematic diagram of a connection of a suspension system of a vehicle according to an embodiment of this application. As shown in FIG. 1 and FIG. 2, the vehicle provided in this application includes a vehicle body 100, wheel shafts 300, wheels 200, and a suspension system. The wheels 200 are installed on the wheel shafts 300, and the suspension system is installed between the wheel shafts 300 and the vehicle body 100. In a specific technical solution, the suspension system includes suspension assemblies 1, drivers 2, a controller 3, a compressor 4, and a gas tank 5. The gas tank 5, the compressor 4, and the suspension assemblies 1 are sequentially connected in series through ventilation pipes. Specifically, the gas tank 5 is connected to the compressor 4 through a first ventilation pipe 6, and a first switch valve 7 is disposed on the first ventilation pipe 6. The compressor 4 is connected to the suspension assemblies 1 through second ventilation pipes 8, and a second switch valve 9 is disposed on each second ventilation pipe 8. When the first switch valve 7 and the second switch valve 9 are in an open state, gas in the gas tank 5 may flow into the suspension assembly 1 through the first ventilation pipe 6, the compressor 4, and the second ventilation pipe 8 in sequence under the action of the compressor 4, to drive the suspension assembly 1 to work.

Specifically, the suspension assemblies 1 each include a gas spring 101 and a height sensor 103. The compressor 4 is specifically connected to the gas spring 101 of the suspension assembly 1 through the second ventilation pipe 8, to control a height of the gas spring 101, so that distances between the vehicle body 100 and the wheels 200 are kept within a specific range. This improves stability and comfort of the vehicle body 100 in a running process of a user vehicle. The controller 3 is electrically connected to the driver 2, so that signal transmission can be performed between the controller 3 and the driver 2. In addition, the driver 2 is further separately electrically connected to the compressor 4, the first switch valve 7, and the second switch valve 9, and the controller 3 is electrically connected to the height sensor 103. The controller 3 is configured to: receive a height signal of the height sensor 103, generate a control signal based on the height signal, and transfer the control signal to the driver 2. The driver 2 is configured to: drive, based on the control signal of the controller 3, the first switch valve 7 and the second switch valve 9 to open or close, and control the compressor 4 to transmit gas to the gas spring 101 or stop transmitting gas.

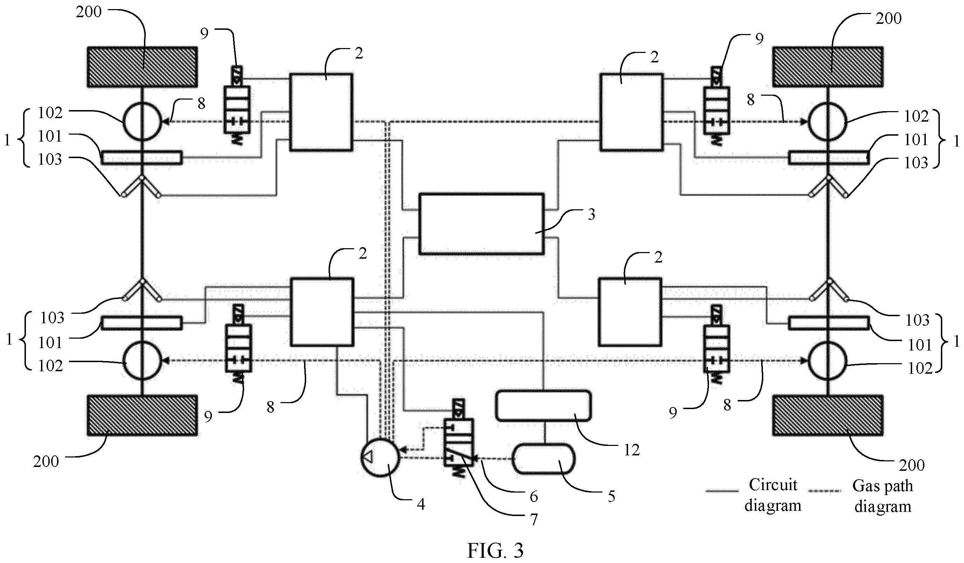

In a specific application process of the suspension system, the height sensor 103 detects a detected height between the vehicle body 100 and the axle 300 at any time, to generate a height signal. The controller 3 may receive the height signal of the height sensor 103. The controller 3 compares the received height signal with a target signal of a target height. When the detected height is less than the target height, it is determined that a height of the vehicle body 100 needs to increase, that is, the gas spring 101 needs to be inflated. In this case, the control signal generated by the controller 3 is a gas filling signal, and the gas filling signal indicates to inflate the gas spring 101. FIG. 3 is a schematic diagram of a gas filling process of a suspension system of a vehicle according to an embodiment of this application. As shown in FIG. 3, a controller 3 transfers the gas filling signal to drivers 2, and the drivers 2 drive, based on the gas filling signal, a first switch valve 7 and second switch valves 9 to open, so that ventilation pipes between gas springs 101 and a gas tank 5 communicate with each other. To be specific, a first ventilation pipe 6 and second ventilation pipes 8 communicate with each other. In addition, the drivers 2 drive a compressor 4 to transport gas in the gas tank 5 to the gas springs 101, to inflate the gas springs 101. It may be considered that the compressor 4 runs in a forward direction in this working state. When detected heights detected by height sensors 103 are the same as a target height, the controller 3 controls the drivers 2 to drive the first switch valve 7 and the second switch valves 9 to close, and drive the compressor 4 to stop running, to stop the gas filling process of the gas springs 101.

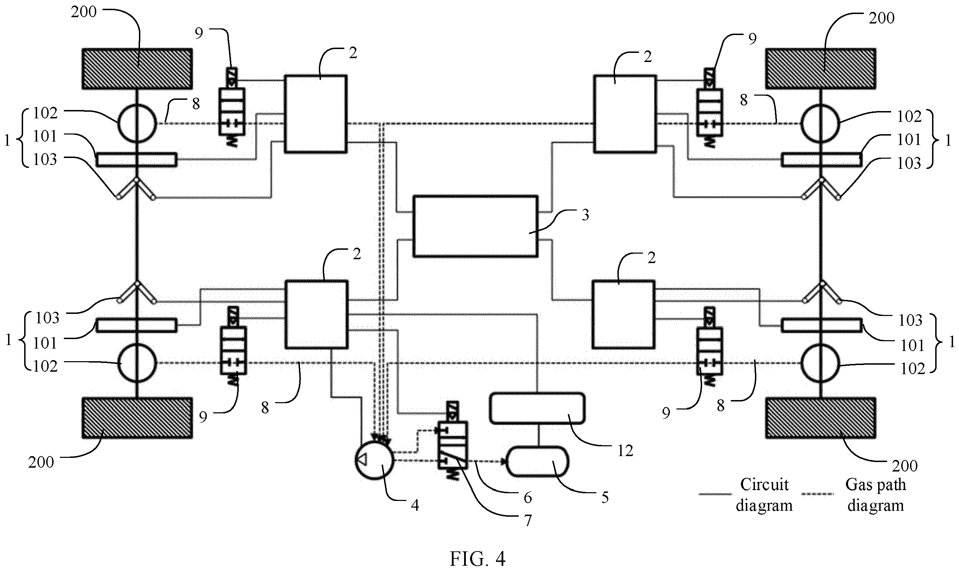

When the detected heights are greater than the target height, it is determined that a height of a vehicle body 100 needs to be lowered, and gas release needs to be performed on the gas springs 101. In this case, a control signal generated by the controller 3 is a gas release signal, and the gas release signal indicates to perform gas release on the gas springs 101. FIG. 4 is a schematic diagram of a gas release process of a suspension system of a vehicle according to an embodiment of this application. As shown in FIG. 4, a controller 3 transfers the gas release signal to drivers 2, and the drivers 2 drive, based on the gas release signal, a first switch valve 7 and second switch valves 9 to open, so that ventilation pipes between gas springs 101 and a gas tank 5 communicate with each other, in other words, a first ventilation pipe 6 and second ventilation pipes 8 communicate with each other. In addition, the drivers 2 drive a compressor 4 to transport gas in the gas springs 101 to the gas tank 5, to release gas in the gas springs 101. It may be considered that the compressor 4 runs in a reverse direction in this working state. When detected heights detected by height sensors 103 are the same as a target height, the controller 3 controls the drivers 2 to drive the first switch valve 7 and the second switch valves 9 to close, and drive the compressor 4 to stop running, to stop the gas release process of the gas springs 101.

In the technical solution of this application, the gas tank 5 is used to store gas, the compressor 4 transports the gas in the gas tank 5 to the gas springs 101, and releases the gas in the gas springs 101 to the gas tank 5. In this solution, a pressure change of the gas is small, that is, a rise amount of and a fall amount of gas pressure is small. Therefore, the gas filling process and gas release process take long time, and lifting and lowering speeds of the vehicle body 100 are fast. In addition, the compressor 4 also requires low power, and both noise and power consumption are low. In addition, in the technical solution of this application, structures such as the controller 3, the driver 2, the first switch valve 7, and the second switch valve 9 are independent structures. Therefore, the structures can be separately manufactured and installed, and costs are low. In addition, the controller 3 may be further configured to control another system in addition to the suspension system.

It should be noted that the controller 3 receives height signals of the height sensors 103, so that the controller 3 may be directly connected to the height sensors 103, and receive the height signals. Alternatively, the drivers 2 may be connected to the height sensors 103, and the drivers 2 obtain the height signals and transfers the height signals to the controller 3. In other words, that the controller 3 is electrically connected to the height sensors 103 may mean that the controller 3 is directly connected to the height sensors 103, or may mean that the controller 3 is connected to the height sensors 103 through the drivers 2.

In a specific embodiment, the suspension assemblies 1 each further include a shock absorber 102. The driver 2 is connected to the shock absorber 102, and the driver 2 is configured to control, based on the control signal of the controller 3, the shock absorber 102 to adjust a damping force. Specifically, the damping force of the shock absorber 102 may be adjusted while a height of the gas spring is adjusted. In the technical solution of this application, the shock absorber may adjust the damping force based on an actual running status of the vehicle. This improves comfort of a user.

In a specific embodiment, the vehicle includes a plurality of systems. For example, in addition to the suspension system, the vehicle may further include a plurality of systems such as a braking system, a steering system, or an auxiliary driving system. In a specific embodiment, the controller 3 may be a system controller, that is, the system controller may be only configured to control working of the suspension system, and is not associated with another system.

In another specific embodiment, the controller 3 may be a domain controller, and the domain controller is configured to control some of the plurality of systems of the vehicle. That is, the domain controller is configured to control at least two systems of the vehicle, rather than all the systems of the vehicle. In this solution, sharing of the controller 3 of the vehicle is improved, so that the controller 3 is moved upward. This reduces a total quantity of system controllers included in the vehicle.

In still another specific embodiment, the controller 3 may alternatively be a vehicle controller. The vehicle controller is configured to control all the systems of the vehicle, to implement unified control and meet a current development requirement of the vehicle.

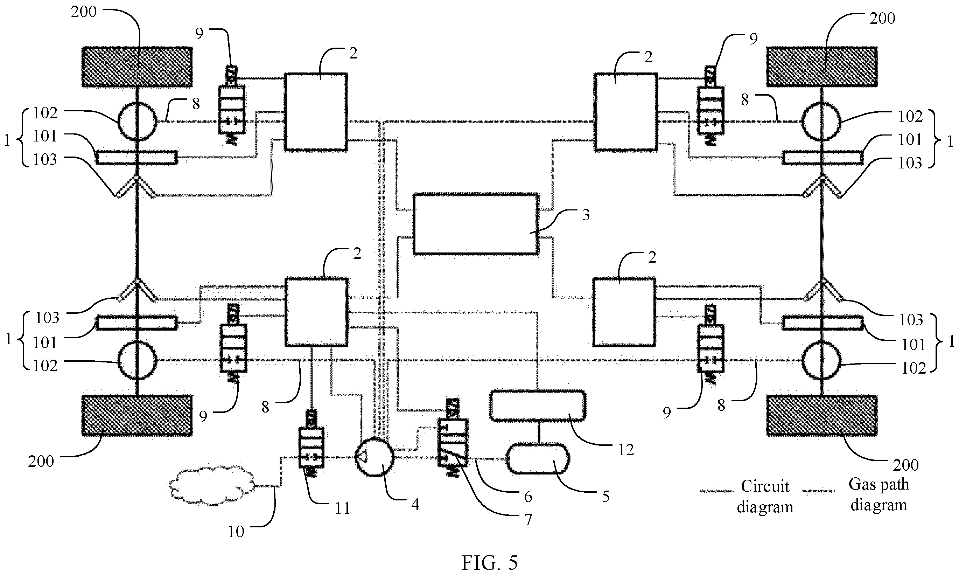

FIG. 5 is a schematic diagram of a connection of another suspension system of a vehicle in an embodiment of this application. As shown in FIG. 5, in a further embodiment, the compressor 4 is further connected to a third ventilation pipe 10, and the third ventilation pipe 10 opens to the outside atmosphere. In addition, a third switch valve 11 is disposed on the third ventilation pipe 10. In a specific working process, the controller 3 may receive a gas filling instruction, control, based on the gas filling instruction, the third switch valve 11 to open, and control the compressor 4 to compress air and then transmit the compressed air to the gas tank 5. Slow leakage of gas is prone to occur during use of the suspension system. Consequently, there is a small amount of gas in the suspension system. In this solution, the suspension system can fill gas by the suspension system, to keep total gas in the suspension system sufficient. This ensures reliability of the suspension system.

In a specific embodiment, the first switch valve 7 is a three-way valve. In a first working state of the three-way valve, the gas tank 5 is connected to a first ventilation opening of the compressor 4, and the first ventilation opening communicates with gas springs 101, and is configured to inflate or release gas for the gas springs 101. In a second working state of the three-way valve, the gas tank 5 is connected to a second ventilation opening of the compressor 4, and the second ventilation opening communicates with the third ventilation pipe 10, to implement gas filling of the gas tank 5. In a third working state of the three-way valve, the three-way valve is in a closed state. In this case, gas cannot flow into or flow out of the gas tank 5. The driver 2 is electrically connected to the controller 3, the compressor 4, a pressure sensor 12, the three-way valve, and the third switch valve 11. The controller 3 may receive a gas filling instruction, generate a gas filling signal, and transfer the gas filling signal to the driver 2. The driver 2 is configured to: control, based on the gas filling signal, the three-way valve to be in the second working state, drive the third switch valve 11 to open, and drive the compressor 4 to compress air and then transmit the compressed air to the gas tank 5, to implement gas filling of the suspension system.

Specifically, when gas filling is performed on the suspension system, a user may actively fill gas. For example, the controller 3 of the suspension system may be connected to a control button, and the user may periodically or irregularly send a gas filling instruction to the controller 3 by operating the control button. The controller 3 receives the gas filling instruction of the control button, generates a gas filling signal, and transfers the gas filling signal to the driver 2. The driver 2 implements gas filling of the suspension system based on the gas filling signal.

Alternatively, in another specific embodiment, the controller 3 may be further enabled to periodically fill the suspension system with gas, that is, the controller 3 periodically generates a gas filling signal, to control the driver 2 to fill the suspension system with gas based on the gas filling signal.

Alternatively, in a specific embodiment, the suspension system may further include the pressure sensor 12. The pressure sensor 12 is connected to the gas tank 5 and may be configured to detect pressure in the gas tank 5, to determine whether gas filling is required. Specifically, the pressure sensor 12 is electrically connected to the controller 3, and the controller 3 is configured to: obtain a pressure signal of the pressure sensor 12, generate a gas filling signal based on the pressure signal, and transfer the gas filling signal to the driver 2. The driver 2 drives, based on the gas filling signal of the controller 3, the suspension system to automatically perform gas filling. This solution can implement automatic gas filling of the suspension system and avoid frequent manual gas filling. It should be noted that the controller 3 receives the pressure signal of the pressure sensor 12, so that the controller 3 may be directly connected to the pressure sensor 12 and receive the pressure signal. Alternatively, the driver 2 may be connected to the pressure sensor 12, and the driver 2 obtains the pressure signal, and transfers the pressure signal to the controller 3. In other words, that the controller 3 is electrically connected to the pressure sensor 12 may mean that the controller 3 is directly connected to the pressure sensor 12, or may mean that the controller 3 is connected to the pressure sensor 12 through the driver 2.

In a specific embodiment, the suspension system may include at least two suspension assemblies 1, and a gas spring 101 in each suspension assembly 1 is connected to one second switch valve 9. In a specific technical solution, the second switch valve 9 of each suspension assembly 1 may be of an independent structure, to facilitate control of each gas spring 101.

Each suspension system is further correspondingly provided with one driver 2. Specifically, when the second switch valve 9 of each suspension assembly 1 and the driver 2 are disposed, the driver 2 may be disposed close to the second switch valve 9, to reduce a cable harness and facilitate cabling of the suspension system.

In a specific embodiment, the second switch valves 9 of all the suspension assemblies 1 are of an integrated structure. This helps reduce volumes of the suspension assemblies 1.

Refer to FIG. 1. In a specific embodiment, the suspension system includes four suspension assemblies 1, and the four suspension assemblies 1 are disposed in a matrix. In this solution, the four suspension assemblies 1 are disposed in a matrix, so that the suspension assemblies 1 are disposed at all four corners of the vehicle, and heights of the vehicle body 100 at the four corners can be adjusted. Specifically, the four suspension assemblies 1 do not need to be simultaneously driven, and the corresponding gas springs 101 may be controlled, based on signals of the corresponding height sensors 103, to perform gas filling and gas release, to improve stability and comfort of the vehicle.

Specifically, the vehicle includes a plurality of suspension assemblies 1, and the plurality of suspension assemblies 1 are disposed in a one-to-one correspondence with the wheels 200 of the vehicle, so that a height between each wheel 200 and the vehicle body 100 can be adjusted. This improves stability and comfort of the vehicle.

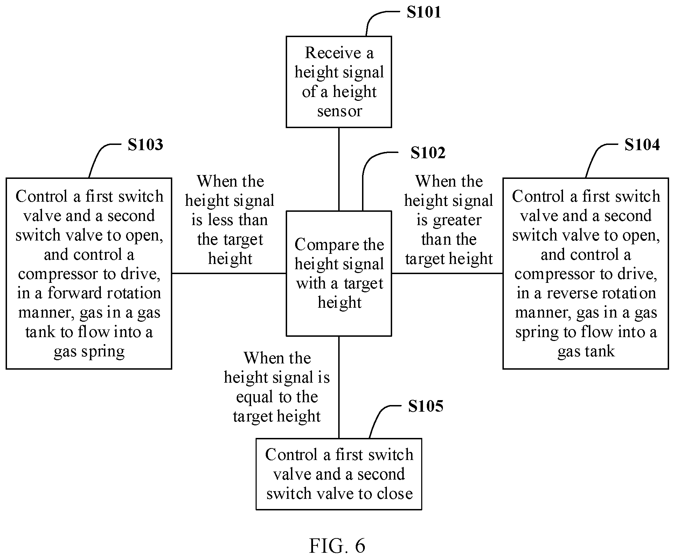

Based on a same inventive concept, this application further provides a control method of a suspension system. The suspension system is specifically the suspension system in any one of the foregoing embodiments. FIG. 6 is a flowchart of a control method of a suspension system according to an embodiment of this application. As shown in FIG. 6, the control method specifically includes the following steps.

Step S101: Receive a height signal of a height sensor.

The height sensor may detect a detection height between a vehicle body and an axle at any time. In a driving process of a vehicle, the height between the vehicle body and the axle needs to be maintained at a specific level, so that a form state of the vehicle can be stable.

Step S102: Compare the height signal with a target height; and when the height signal is less than the target height, perform step S103; when the height signal is greater than the target height, perform step S104; or when the height signal is equal to the target height, perform step S105. When the height signal is less than the target height, it is considered that the height between the vehicle body and the axle is excessively low, and a height of a gas spring needs to increase, so that the height between the vehicle body and the axle meets the target height. When the height signal is greater than the target height, it is considered that the height between the vehicle body and the axle is excessively high, and the height of the gas spring needs to be reduced, so that the height between the vehicle body and the axle meets the target height. It should be noted that the target height may be a specific height value, or may be a height range value. That the height signal is equal to the target height means that the height signal is within the height range value.

Step S103: Control a first switch valve and a second switch valve to open, and control a compressor to drive, in a forward rotation manner, gas in a gas tank to flow into the gas spring, so that the height of the gas spring is increased, and the height between the vehicle body and the axle is increased.

Step S104: Control a first switch valve and a second switch valve to open, and control a compressor to drive, in a reverse rotation manner, gas in the gas spring to flow into a gas tank, so that the height of the gas spring is reduced, and the height between the vehicle body and the axle is reduced. Step S105: Control a first switch valve and a second switch valve to close, so that the height of the gas spring remains unchanged, and the height between the vehicle body and the axle remains unchanged.

In the foregoing control process, the suspension system of the vehicle can automatically adjust the height between the vehicle body and the axle, to improve stability of the vehicle in a running process.

The compressor may also be connected to a third ventilation pipe, and the third ventilation pipe opens to the outside atmosphere, so that the compressor can compress air in the atmosphere and transmit the compressed air to the gas tank during working, to fill the gas tank with gas. A specific gas filling control method includes: receiving a gas filling signal, controlling, based on the gas filling signal, the first switch valve and a third switch valve to open, and controlling the compressor to compress air and then transmit the compressed air to the gas tank. The third switch valve is closed when there is no need to fill gas, so that gas in the suspension system is kept circulating internally and does not leak from the third ventilation pipe. In this technical solution, the suspension system can automatically perform gas filling, to keep a sufficient amount of gas in the suspension system to maintain normal working.

In a specific embodiment, a manner of triggering the gas filling signal is not limited. For example, a controller of the suspension system may be connected to a control button, and a user may periodically or irregularly send a gas filling signal instruction to the controller by operating the control button. The controller receives the gas filling instruction of the control button, generates a gas filling signal, and implements gas filling of the suspension system based on the gas filling signal. Alternatively, the controller may be enabled to periodically fill the suspension system with gas, that is, the controller periodically generates a gas filling signal, to fill the suspension system with gas based on the gas filling signal.

Alternatively, the suspension system may further include a pressure sensor. The pressure sensor is connected to the gas tank and is configured to detect pressure in the gas tank. The control method further includes: obtaining pressure detected by the pressure sensor, and when the pressure is less than specified pressure, determining that gas in the gas tank is insufficient, and generating a gas filling signal; and controlling, based on the gas filling signal, the first switch valve and the third switch valve to open, and controlling the compressor to compress air and then transmit the compressed air to the gas tank. In this solution, when it is found that the gas in the gas tank is insufficient, gas filling may be performed at any time based on an actual gas situation in the gas tank, to ensure working reliability of the suspension system and avoid a useless gas filling operation.

It is clear that a person skilled in the art can make various modifications and variations to this application without departing from the protection scope of this application. Thus, this application is intended to cover such modifications and variations to this application, provided that the modifications and variations fall within the scope of the claims of this application and their equivalent technologies.

## Claims

1. A suspension system, comprising a suspension assembly, a driver, a controller, a compressor, and a gas tank, wherein the suspension assembly comprises a gas spring and a height sensor, wherein
the gas tank is connected to the compressor through a first ventilation pipe, and a first switch valve is disposed on the first ventilation pipe; the compressor is connected to the gas spring through a second ventilation pipe, and a second switch valve is disposed on the second ventilation pipe; the driver is separately electrically connected to the controller, the compressor, the first switch valve, and the second switch valve, and the controller is electrically connected to the height sensor; and
the controller is configured to: receive a height signal of the height sensor, generate a control signal based on the height signal, and transfer the control signal to the driver; and the driver is configured to: control, based on the control signal, the first switch valve and the second switch valve to open or close, and control the compressor to drive gas in the gas spring to flow into the gas tank, drive gas in the gas tank to flow into the gas spring, or stop transmitting gas.

2. The suspension system according to claim 1, wherein the compressor is further connected to a third ventilation pipe, the third ventilation pipe opens to the outside atmosphere, and a third switch valve is disposed on the third ventilation pipe; and when the first switch valve and the third switch valve are in an open state, the compressor compresses air and then transmits the compressed air to the gas tank.

3. The suspension system according to claim 2, wherein the gas tank is further connected to a pressure sensor, the first switch valve is a three-way valve, the driver is electrically connected to the compressor, the three-way valve, and the third switch valve, and the controller is electrically connected to the pressure sensor; and the controller is configured to: obtain a pressure signal of the pressure sensor, generate a gas filling signal based on the pressure signal, and transmit the gas filling signal to the driver, and the driver is configured to: drive, based on the gas filling signal, the three-way valve to connect the compressor and the gas tank, drive the third switch valve to open, and drive the compressor to compress air and then transmit the compressed air to the gas tank.

4. The suspension system according to any one of claims 1 to 3, wherein the suspension assembly further comprises a shock absorber, the driver is also connected to the shock absorber, and the driver is further configured to control, based on the control signal of the controller, the shock absorber to adjust a damping force.

5. The suspension system according to any one of claims 1 to 4, wherein the suspension system comprises at least two suspension assemblies, and a gas spring in each suspension assembly is connected to one second switch valve.

6. The suspension system according to claim 5, wherein all second switch valves are of an integrated structure.

7. The suspension system according to claim 5 or 6, wherein each suspension assembly is correspondingly provided with one driver.

8. The suspension system according to any one of claims 1 to 7, wherein the suspension system comprises four suspension assemblies, and the four suspension assemblies are disposed in a matrix.

9. The suspension system according to any one of claims 1 to 8, wherein the controller is a system controller, a domain controller, or a vehicle controller.

10. A control method of the suspension system according to any one of claims 1 to 9, comprising:
receiving the height signal of the height sensor; and
when the height signal is less than a target height, controlling the first switch valve and the second switch valve to open, and controlling the compressor to drive, in a forward rotation manner, the gas in the gas tank to flow into the gas spring; when the height signal is less than the target height, controlling the first switch valve and the second switch valve to open, and controlling the compressor to drive, in a reverse rotation manner, the gas in the gas spring to flow into the gas tank; or when the height signal is equal to the target height, controlling the first switch valve and the second switch valve to close.

11. The control method according to claim 10, wherein the compressor is further connected to the third ventilation pipe, the third ventilation pipe opens to the outside atmosphere, and the third switch valve is disposed on the third ventilation pipe; and the control method further comprises:
controlling the first switch valve and the third switch valve to open, and controlling the compressor to compress air and then transmit the compressed air to the gas tank.

12. The control method according to claim 11, wherein the gas tank is further connected to the pressure sensor, the pressure sensor is configured to detect pressure in the gas tank, and the control method comprises:
obtaining pressure detected by the pressure sensor; and
when the pressure is less than specified pressure, generating a gas filling signal; and controlling, based on the gas filling signal, the first switch valve and the third switch valve to open, and controlling the compressor to compress air and then transmit the compressed air to the gas tank.

13. A vehicle, comprising a vehicle body, a wheel shaft, wheels, and the suspension system according to any one of claims 1 to 8, wherein the wheels are installed on the wheel shaft, and the suspension system is installed between the wheel shaft and the vehicle body.

14. The vehicle according to claim 13, wherein the controller is a domain controller, the vehicle comprises a plurality of systems, and some of the plurality of systems share the domain controller.

15. The vehicle according to claim 13, wherein the controller is a vehicle controller, the vehicle further comprises a plurality of systems, and all the systems share the vehicle controller.

16. The vehicle according to any one of claims 13 to 15, wherein the suspension system comprises a plurality of suspension assemblies, and the plurality of suspension assemblies are disposed in a one-to-one correspondence with the wheels of the vehicle.
